# EUROPÄISCHE PATENTSCHRIFT

(11) **EP 3 097 336 B1**
(45) Veröffentlichungstag und Bekanntmachung des Hinweises auf die Patenterteilung: **18.04.2018**
(21) Anmeldenummer: 15700462.3
(22) Anmeldetag: 15.01.2015
(51) Int. Cl.: F16L 37/088, F16L 19/02

(54) **SPIELFREIE STECKVERBINDUNG FÜR ROHR- UND SCHLAUCHLEITUNGEN**
PLAY-FREE INSERTION CONNECTION FOR PIPE LINES AND HOSE LINES
RACCORD ENFICHABLE SANS JEU POUR TUBES ET TUYAUX FLEXIBLES

(30) Priorität: 23.01.2014 DE 102014100758
(43) Veröffentlichungstag der Anmeldung: 30.11.2016
(73) Patentinhaber: Parker Hannifin Manufacturing Germany GmbH & Co. KG, 33659 Bielefeld (DE)
(72) Erfinder: EHRKE, Dieter, 33659 Bielefeld (DE); HUNKENSCHROEDER, Udo, 33689 Bielefeld (DE)
(74) Vertreter: Feucker, Max Martin
(86) Internationale Anmeldenummer: PCT/EP2015/050661
(87) Internationale Veröffentlichungsnummer: WO 2015/110342

(56) Entgegenhaltungen:
- EP-A1- 1 561 988
- WO-A1-2012/163951
- DE-A1-102009 022 859
- DE-B3-102004 035 354
- DE-U1-202006 008 916

## Beschreibung

Die vorliegende Erfindung betrifft eine Steckverbindung für Rohr- oder Schlauchleitungen mit einem eine Bohrung zur Durchleitung eines die Rohr- oder Schlauchleitung durchströmenden Mediums aufweisenden Verschraubungskörper und mit einer auf den Verschraubungskörper aufgeschraubten Überwurfmutter zur verriegelnden Aufnahme eines in den Verschraubungskörper eingesteckten Rohrstücks mittels eines sich an einer an dem Rohrstück angeordneten Haltefläche abstützenden Sicherungsringes, der in einer von der Überwurfmutter, dem Verschraubungskörper und dem Rohrstück begrenzten Kammer angeordnet ist, wobei in einer dem Sicherungsring zugeordneten Bodenfläche der Kammer eine gestufte Ausnehmung zur Aufnahme des Sicherungsringes ausgebildet ist bestehend aus einer der Kammer benachbarten und der Aufnahme des Sicherungsringes beim Einstecken des Rohrstückes eingerichteten ersten Stufe und einer sich daran anschließenden und den Sicherungsring in einer Anlage an der Haltefläche des eingesteckten Rohrstückes festlegenden zweiten Stufe, wobei ferner in der Kammer eine das eingesteckte Rohrstück gegen den Verschraubungskörper abdichtende Dichtung angeordnet ist und das Rohrstück durch Druckbeaufschlagung des Mediums von seiner Einsteckstellung gegen die Einsteckrichtung gegenüber dem Verschraubungskörper in seine Verriegelungsstellung überführbar ist, in welcher der Sicherungsring in der zweiten Stufe der Ausnehmung liegt.

Eine Steckverbindung mit den vorgenannten Merkmalen ist in der DE 10 2004 035 354 B3 beschrieben. Diese bekannte Steckverbindung beruht auf dem Verriegelungsprinzip, dass einerseits in einer in der auf dem mit einem ersten Rohr verbundenen oder einen Bestandteil davon bildenden Verschraubungskörper fest aufgeschraubten Überwurfmutter ausgebildeten Kammer ein federnd aufweitbarer Sicherungsring angeordnet ist und dass andererseits ein Rohrstück in Form eines zweiten Rohres mit einer daran durch Verformung seiner Rohrwandung ausgebildeten Wulst in die Kammer der Überwurfmutter bzw. den daran anschließenden Verschraubungskörper einsteckbar und darin mittels des Sicherungsringes verriegelbar ist. Beim Einstecken des Rohrstückes weitet die Wulst den federnd ausgebildeten Sicherungsring auf, bis dieser bei Erreichen der Verbindungsstellung von Verschraubungskörper und Rohrstück hinter die durch die Wulst gebildete Verriegelungsfläche schnappt. Um diese radiale Bewegung des Sicherungsringes zu ermöglichen, ist in der dem Sicherungsring zugeordneten Bodenfläche der Kammer eine gestufte Ausnehmung zur Aufnahme des Sicherungsringes ausgebildet, die aus einer der Kammer benachbarten und zur Aufnahme des Sicherungsringes beim Einstecken des Rohrstückes eingerichteten ersten Stufe und einer daran anschließenden und den Sicherungsring in einer verriegelnde Anlage an dem eingesteckten Rohrstück festlegenden zweiten Stufe besteht. Aufgrund der Zuordnung dieser beiden Stufen der Ausnehmung ist bei der bekannten Steckverbindung eine Drehung der Überwurfmutter auf dem Verschraubungskörper bei eingestecktem Rohrstück nicht vorgesehen.

Mit einer derartigen Steckverbindung ist noch der Nachteil verbunden, dass in der zunächst unbelasteten Einsteckstellung des Rohrstückes in dem Verschraubungskörper der Sicherungsring gegen die Übergangsecke zwischen der ersten Ausnehmungsstufe und der zweiten Ausnehmungsstufe anliegt. Erst bei einer unter Druck stehenden Steckverbindung oder einer darauf ausgeübten Zugbelastung wird der Sicherungsring vollständig in die zweite Ausnehmungsstufe hineingezogen und darin durch die Lage der Überwurfmutter auf dem Verschraubungskörper festgelegt. Daraus folgt, dass bei wechselnden Drücken und insbesondere bei druckloser Steckverbindung ein gewisses axiales Spiel des Rohrstückes mit Verriegelungsfläche gegenüber dem Verschraubungskörper mit Überwurfmutter vorhanden ist. Dieses axiale Spiel führt bei einer dynamischen Druckbeanspruchung oder bei auf die Steckverbindung einwirkenden Vibrationen zu entsprechenden Axialbewegungen der Bauteile gegeneinander und damit zu einem Verschleiß und in der Folge zu einer geringeren Lebensdauer der Steckverbindung.

Der Erfindung liegt daher die Aufgabe zugrunde, eine Steckverbindung mit den gattungsgemäßen Merkmalen so weiterzubilden, dass bei dynamischer Druckbeaufschlagung bishin zu einem drucklosen Zustand sowie bei einwirkenden Vibrationen eine Relativbewegung der Bauteile der Steckverbindung gegeneinander vermieden ist.

Gelöst wird diese Aufgabe durch eine Steckverbindung mit den Merkmalen des unabhängigen Anspruchs. Vorteilhafter Ausbildungen der Steckverbindung sind in den abhängigen Ansprüchen und in der Beschreibung angegeben, wobei Merkmale dieser vorteilhaften Ausgestaltungen in beliebiger technologisch sinnvoller Weise mit einander kombiniert werden können.

Die Aufgabe wird insbesondere dadurch gelöst, dass in der Kammer zwischen dem Sicherungsring und der Dichtung ein Fixierring angeordnet ist, der sich zwischen dem eingestecktem Rohrstück und eine an dem Verschraubungskörper und/oder der Überwurfmutter ausgebildeten und mit einem axialen Verlauf in Richtung des Sicherungsrings zur Längsachse des Rohrstücks geneigten Anlagefläche abstützt, wobei die Anlagefläche mit einer solchen Neigung ausgebildet ist, dass der bei in der Verriegelungsstellung befindlichem Rohrstück von der druckbeaufschlagten Dichtung in seine Fixierstellung verschobene Fixierring selbsthemmend in der Kammer geklemmt ist und dadurch das Rohrstück spielfrei festlegt. Dabei wirkt die spielfreie Festlegung sowohl in axialer als auch in radialer Richtung sowie bei wechselnder Druckbeanspruchung bis hin zu einem drucklosen Zustand. Bevorzugt ist der Fixierring mit der Dichtung und mit dem Sicherungsring in Anlage.

Bei erstmaliger Druckbeaufschlagung der Steckverbindung durch das unter Druck stehende Medium wird also das Rohrstück mit dem Sicherungsring in seine Verriegelungsstellung axial verschoben, so dass aufgrund der fertigungs- und funktionsbedingten Zwischenräume das vorne aus dem Rohrstück austretende Medium an der Dichtung anliegt, die wiederum mit dem Fixierring in Kontakt ist. Aufgrund des Druckes des Mediums wird die Dichtung mit dem Fixierring in die Fixierstellung geschoben. Die Größe der dabei auf den Fixierring wirkenden Kraft hängt vom Betriebsdruck des Mediums und von der Größe der Dichtung ab. Folglich kann eine optimale Kraft über die Größe der gewählten Dichtung eingestellt werden. Zudem kann die Fixierung des Fixierrings durch die Wahl des gewählten Werkstoffes für den Fixierring gewählt werden. Die Fixierung setzt bei weichen Materialien bei geringen Kräften ein und bei harten Materialien bei hohen Kräften. Bevorzugt ist der Fixierring aus einem hochfesten Kunststoff.

Erfindungsgemäß kann die Anlagefläche an der Überwurfmutter oder an dem Verschraubungskörper ausgebildet sein, wobei zu dem Verschraubungskörper auch ein in der Kammer angeordneter sich zwischen Verschraubungskörper und Überwurfmutter abstützender Zwischenring gezählt werden kann, der die Funktion eines Adapters oder einer Anpassung des Verschraubungskörpers an verschiedene Rohrstücke haben kann. Die Anlagefläche muss eine solche Neigung zu der Längsachse des Rohrstücks haben, dass selbst eine Selbsthemmung eintreten kann. Mit Selbsthemmung ist gemeint, dass selbst bei einem drucklosen Zustand der Fixierring nicht zurück in die Einsteckstellung gelangen kann. Daraus ergibt sich auch der entscheidende Vorteil der vorliegenden Erfindung, da nämlich der Fixierring auch in einem drucklosen Zustand des Mediums das Rohrstück insbesondere in axialer Richtung spielfrei hält, wobei die spielfreie Verriegelungsstellung ohne weitere Betätigung der Überwurfmutter oder des Verschraubungskörpers erfolgt. Die spielfreie Verriegelungsstellung wird also bei einmaliger Druckanlegung des Mediums erreicht. In der spielfreien Verriegelungsstellung ist eine Relativbewegung der Teile der Steckverbindung und der Rohr- oder Schlauchleitung zueinander unterbunden.

Gemäß der vorliegenden Erfindung wird das in die Steckverbindung eingesteckte Rohrstück durch den Sicherungsring in der Verriegelungsstellung gehalten und durch den in der Fixierstellung befindlichen Fixierring spielfrei festgelegt.

Bevorzugt ist, dass die Anlagefläche mit einem Winkel von kleiner als 10° zu einer Längsachse des Rohrstücks geneigt ist. Bei einem solch kleinen Winkel zwischen Anlagefläche und Längsachse liegt in der Regel immer eine Selbsthemmung vor.

Gemäß einer vorteilhaften Weiterbildung ist die Anlagefläche in der Überwurfmutter ausgebildet, wobei bevorzugt die axiale Begrenzungsfläche der ersten Stufe der Ausnehmung gegen die Einsteckrichtung geneigt ist und somit die Anlagefläche bildet. Die Anlagefläche kann bspw. ausschließlich an der Überwurfmutter ausgebildet sein.

Alternativ ist die Anlagefläche an einem in der Kammer angeordneten Zwischenring oder einem an dem Verschraubungskörper ausgebildeten Stutzen ausgebildet. Insbesondere ist die Anlagefläche nur an einem dieser Elemente ausgebildet. In dem Fall, dass Anlageflächen sowohl an der Überwurfmutter als auch an dem Zwischenring oder dem Stutzen ausgebildet sind, wird der Fixierring an mehreren Stellen geklemmt, wodurch eine sicherere Fixierung erreicht wird.

Um den Fixierring beim Einstecken des Rohrstückes in den Verschraubungskörper in einer vordefinierten Position zu halten und bei einer Druckbeaufschlagung des Mediums eine zusätzliche Klemmkraft aufzubringen, ist bevorzugt, dass der Fixierring in seinem axialen Querschnitt Z-förmig gestaltet ist, so dass er einerseits in axialer Richtung in Anlage mit einem in der Kammer angeordneten Zwischenring oder einem an dem Verschraubungskörper ausgebildeten Stutzen ist und andererseits in axialer Richtung in Anlage mit einer Wulst am Rohrstück ist. In diesem Zusammenhang ist es auch bevorzugt, wenn der Fixierring in der Einsteckstellung und in der Verriegelungsstellung an einer Wulst des Rohrstückes anliegt.

Gemäß einer weiteren vorteilhaften Ausbildung der Steckverbindung weist der Fixierring mindestens einen parallel zur Längsachse ausgerichteten Schlitz auf. Die Fixierwirkung des Fixierringes und dessen Selbsthemmung bleiben dabei erhalten, da diese hauptsächlich von der Gestaltung der Winkel der Anlagenflächen abhängen. Der Fixierring kann einen oder mehrere zumindest teilweise in Längsrichtung verlaufende Schlitze aufweisen. Bei einem Fixierring aus Kunststoff ist bevorzugt, dass dieser mehrere nur teilweise in dem Fixierring in Längsrichtung verlaufende Schlitze aufweist. Bei der Ausbildung des Fixierringes aus einem Metall, wie Messing oder Aluminium ist bevorzugt, dass genau ein Schlitz ausgebildet ist, der in der Längsrichtung komplett durch den Fixierring verläuft. Ein solcher Metallring kann mehr Vibrationen abfangen als ein Kunststoffring.

Die vorliegende Erfindung und das technische Umfeld werden anhand der folgenden Figuren näher erläutert, wobei darauf hinzuweisen ist, dass die Figuren bevorzugte Ausführungsformen der Erfindung zeigen, diese jedoch nicht darauf beschränkt ist. Es zeigen schematisch
- Figur 1:: eine erfindungsgemäße Steckverbindung,
- Figur 2:: die Steckverbindung mit eingestecktem Rohrstück,
- Figur 3:: die Steckverbindung in Verriegelungsstellung,
- Figur 4:: eine Detail der Steckverbindung in Verriegelungsstellung,
- Figur 5:: eine weitere Ausführungsform einer erfindungsgemäßen Steckverbindung und
- Figur 6:: einen Fixierring.

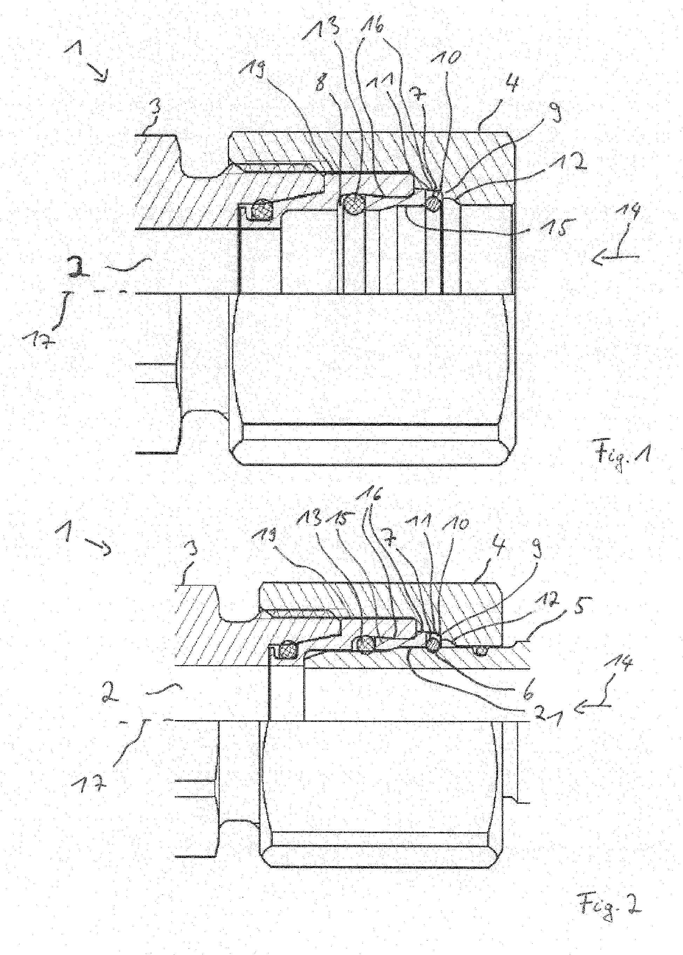

Die in den Figuren 1 bis 4 dargestellte Steckverbindung 1 besteht aus einem Verschraubungskörper 3, auf dessen mit einem entsprechenden Außengewinde versehenen Schraubstutzen eine Überwurfmutter 4 mit entsprechendem Innengewinde aufgeschraubt ist. In dem Verschraubungskörper 3 ist eine Bohrung 2 ausgebildet. In den insoweit vormontierten Verschraubungskörper 3 mit darauf geschraubter Überwurfmutter 4 ist ein Rohrstück 5 einsteckbar (Fig. 2). In der Steckverbindung 1 ist durch den Verschraubungskörper 3, die Überwurfmutter 4 und das Rohrstück 5 eine Kammer 8 gebildet. In der Kammer 8 ist neben einem Sicherungsring 7 ein mit dem Sicherungsring 7 in Anlage befindlicher Fixierring 15 angeordnet. In der Kammer ist zudem ein an die Form des Verschraubungskörpers 3 anpassender Zwischenring 19 angeordnet. Ferner ist in der Kammer 8 die Dichtung in Form eines Dichtungsringes 13 angeordnet, welche mit dem Einsteckende des Rohrstückes 5 dichtend zusammenwirkt und das Rohrstück 5 gegenüber dem Zwischenring 19 abdichtet.

In dem Einsteckbereich des Rohrstücks 5 ist eine über den äußeren Umfang des Einsteckbereichs überstehende Wulst 21 ausgebildet, wobei sich an die Wulst 21 eine Haltefläche 6 in Form einer Nut anschließt. Das Rohrstück 5 weist eine mit dem Verschraubungskörper 3 und der Überwurfmutter 4 übereinstimmende Längsachse 17 auf.

Der Fixierring 15 liegt mit seinem Außenumfang an zwei Anlagenflächen 16 an. Die eine Anlagefläche 16 ist an dem Zwischenring 19 ausgebildet und die andere Anlagefläche an der Überwurfmutter 4. Die Anlagenflächen sind mit einem Winkel 18 von kleiner 10° gegenüber der Längsachse 17 geneigt. Für die Erfindung wäre es ausreichend, wenn der Zwischenring 19 nur an einer der Anlagenflächen 16 anliegen würde.

In der Überwurfmutter 4 ist eine zweistufige Ausnehmung 10 zur Aufnahme des Sicherungsringes 7 in einer Einsteckstellung für das Rohrstück 5 und in einer Verriegelungsstellung in der Nähe einer Bodenfläche 9 der Überwurfmutter 4 ausgebildet mit einer ersten Stufe 11 und einer zweiten Stufe 12. Zur Montage der Rohr-Steckverbindung wird das einzusteckende Rohrstück 5 in die aus Verschraubungskörper 3 und Überwurfmutter 4 bestehende Einheit eingesteckt, wobei der Sicherungsring 7 in der Einsteckstellung, wie aus Fig. 2 ersichtlich, an der Haltefläche 6 zur Anlage kommt. In der Darstellung der Fig. 2 liegt der Sicherungsring 7 noch in der ersten Stufe 11 der Ausnehmung 10.

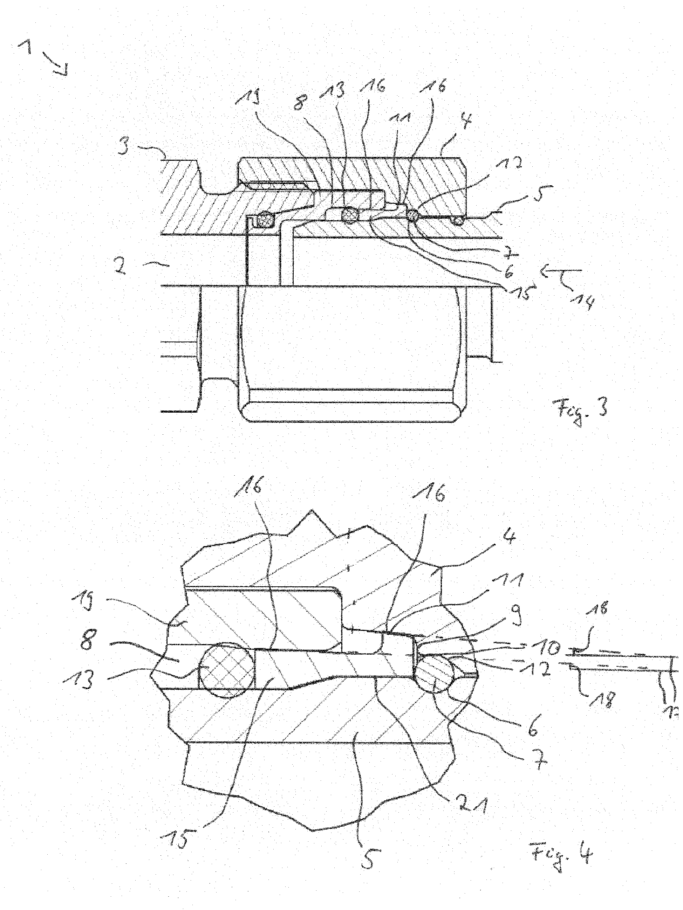

Wird nun das in dem Rohrstück 5 fließende Medium unter Druck gesetzt, so wird zunächst das Rohrstück 5 aufgrund des Druckes axial gegen die Einsteckrichtung 14 verschoben, wodurch der federnd aufweitbare Sicherungsring 7 in der zweiten Stufe 12 zur Anlage kommt. Somit kann nun aufgrund des fertigungs- und funktionsbedingten Spiels das unter Druck stehendes Medium zu dem Dichtungsring 13 gelangen, welcher wiederum unter Druckeinwirkung den Fixierring 15 gegen die Einsteckrichtung 14 verschiebt. Da sich die Anlagenflächen 16 gegen die Einsteckrichtung 14 mit dem Winkel 18 verjüngen, wird nun der Fixierring 15 zwischen den Anlagenflächen 16 und dem Rohrstück 5 eingeklemmt. Die Verriegelungsstellung und Fixierstellung sind in den Figuren 3 und in einer Vergrößerung in Figur 4 dargestellt.

Aufgrund der Neigung der Anlagenflächen 16 gegenüber der Längsachse 17 liegt der Fixierring 15 selbsthemmend zwischen den Anlageflächen 16 und dem Rohrstück 5, wodurch der Fixierring 15 auch in einem drucklosen Zustand spielfrei in der Steckverbindung 1 gehalten wird.

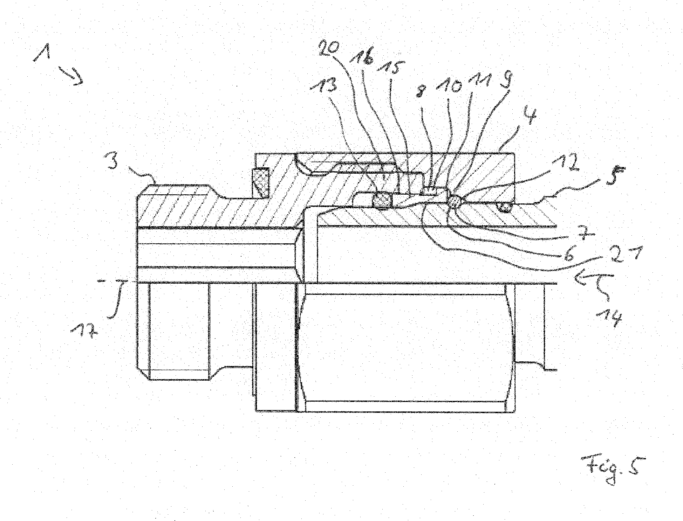

In Fig. 5 ist eine alternative Ausführungsform der erfindungsgemäßen Steckverbindung 1 dargestellt, wobei im Folgenden nur auf die Unterschiede eingegangen wird. Anders als bei der zuvor diskutierten Ausführungsform ist hier der Verschraubungskörper 3 selbst so geformt, dass er eine Anlagefläche 16 für die Dichtung 13 und den Fixierring 15 in Form eines Stutzens 20 bildet. Es wird somit im Vergleich zudem zuvor behandelten Ausführungsform ein Teil, nämlich der Zwischenring, eingespart, wodurch eine kompaktere Anordnung erreicht werden kann.

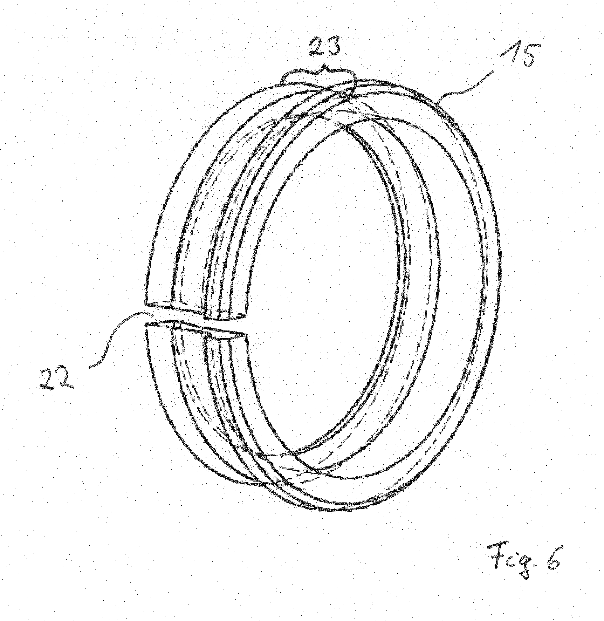

In Fig. 6 ist ein Fixierring 15 dargestellt, der einen Schlitz 22 aufweist. Der Schlitz verläuft parallel zu einer Längsachse 17 der Steckverbindung 1 und verläuft über die gesamte Breite 23 des Fixierringes 15. In einer nicht dargestellten Ausführungsform könnte der Schlitz 22 auch nur über einen Teil der Breite 23 des Fixierringes 15 verlaufen.

Mit der vorliegenden Erfindung kann eine spielfreie, den Verschleiß reduzierende Steckverbindung erreicht werden, ohne dass eine die Verbindung herstellende Person einen zusätzlichen Montageschritt ausführen muss.

### Bezugszeichenliste

- 1: Steckverbindung
- 2: Bohrung
- 3: Verschraubungskörper
- 4: Überwurfmutter
- 5: Rohrstück
- 6: Haltefläche
- 7: Sicherungsring
- 8: Kammer
- 9: Bodenfläche
- 10: Ausnehmung
- 11: erste Stufe
- 12: zweite Stufe
- 13: Dichtungsring
- 14: Einsteckrichtung
- 15: Fixierring
- 16: Anlagefläche
- 17: Längsachse
- 18: Winkel
- 19: Zwischenring
- 20: Stutzen
- 21: Wulst
- 22: Schlitz
- 23: Breite

## Patentansprüche

1. Steckverbindung (1) für Rohr- oder Schlauchleitungen mit einem eine Bohrung (2) zur Durchleitung eines die Rohr- oder Schlauchleitung durchströmenden Mediums aufweisenden Verschraubungskörper (3) und mit einer auf den Verschraubungskörper (3) aufgeschraubten Überwurfmutter (4) zur verriegelnden Aufnahme eines in den Verschraubungskörper (3) eingesteckten Rohrstücks (5) mittels eines sich an einer an dem Rohrstück (5) angeordneten Haltefläche (6) abstützenden Sicherungsringes (7), der in einer von der Überwurfmutter (4), dem Verschraubungskörper (3) und dem Rohrstück (5) begrenzten Kammer (8) angeordnet ist, wobei in einer dem Sicherungsring (7) zugeordneten Bodenfläche (9) der Kammer (8) eine gestufte Ausnehmung (10) zur Aufnahme des Sicherungsringes (7) ausgebildet ist bestehend aus einer der Kammer (8) benachbarten und der Aufnahme des Sicherungsringes (7) beim Einstecken des Rohrstückes (5) eingerichteten ersten Stufe (11) und einer sich daran anschließenden und den Sicherungsring (7) in einer Anlage an der Haltefläche (6) des eingesteckten Rohrstückes (5) festlegenden zweiten Stufe (12), wobei ferner in der Kammer (8) eine das eingesteckte Rohrstück (5) gegen den Verschraubungskörper (3) abdichtende Dichtung (13) angeordnet ist und das Rohrstück (5) durch Druckbeaufschlagung des Mediums von seiner Einsteckstellung gegen die Einsteckrichtung (14) gegenüber dem Verschraubungskörpers (3) in seine Verriegelungsstellung überführbar ist, in welcher der Sicherungsring (7) in der zweiten Stufe (12) der Ausnehmung (10) liegt, **dadurch gekennzeichnet, dass** in der Kammer (8) zwischen dem Sicherungsring (7) und der Dichtung (13) ein Fixierring (15) angeordnet ist, der sich zwischen dem eingestecktem Rohrstück (5) und einer an dem Verschraubungskörper (3) und/oder der Überwurfmutter (4) ausgebildeten und mit einem axialen Verlauf in Richtung des Sicherungsrings (7) zur Längsachse (17) des Rohrstücks (5) geneigten Anlagefläche (16) abstützt, wobei die Anlagefläche (16) mit einer solchen Neigung ausgebildet ist, dass der bei in der Verriegelungsstellung befindlichem Rohrstück (5) von der druckbeaufschlagten Dichtung (13) in seine Fixierstellung verschobene Fixierring (15) selbsthemmend in der Kammer (8) geklemmt ist und dadurch das Rohrstück (5) spielfrei festlegt.

2. Steckverbindung (1) nach Anspruch 1, wobei die Anlagefläche (16) mit einem Winkel (18) von kleiner als 10° zu einer Längsachse (17) des Rohrstücks (5) geneigt ist.

3. Steckverbindung (1) nach Anspruch 1 oder 2, wobei die Anlagenflächen (16) in der Überwurfmutter (4) ausgebildet ist.

4. Steckverbindung (1) nach Anspruch 3, wobei die axiale Begrenzungsfläche der ersten Stufe (11) der Ausnehmung (10) gegen die Einsteckrichtung (14) geneigt ist und die Anlagefläche (16) bildet.

5. Steckverbindung (1) nach einem der vorhergehenden Ansprüche, wobei die Anlagefläche (16) an einem in der Kammer (8) angeordneten sich zwischen Verschraubungskörper (3) und Überwurfmutter (4) abstützenden Zwischenring (19) oder einem an dem Verschraubungskörper (3) ausgebildeten Stutzen (20) ausgebildet ist.

6. Steckverbindung (1) nach einem der vorhergehenden Ansprüche, wobei der Fixierring (15) in seinem axialen Querschnitt Z-förmig gestaltet ist, so dass er einerseits in axialer Richtung in Anlage mit einem in der Kammer (8) angeordneten Zwischenring (19) oder einem an dem Verschraubungskörper (3) ausgebildeten Stutzen (20) ist und andererseits in axialer Richtung in Anlage mit einer Wulst (21) am Rohrstück (5) ist.

7. Steckverbindung (1) nach einem der vorhergehenden Ansprüche, wobei der Fixierring (15) in der Einsteckstellung (14) und der Verriegelungsstellung an einer Wulst (21) des Rohrstückes (5) anliegt.

8. Steckverbindung (1) nach einem der vorhergehenden Ansprüche, wobei der Fixierring (15) mindestens einen parallel zur Längsachse (17) ausgerichteten Schlitz (22) aufweist.

## Claims

1. A plug-in connection (1) for pipe lines or hose lines with a threaded-connection body (3) exhibiting a borehole (2) for relaying a medium flowing through the pipe line or hose line, and with a union nut (4) screwed onto the threaded-connection body (3) for the locked retention of a pipe piece (5) inserted into the threaded-connection body (3) by means of a securing ring (7) that is supported against a retaining surface (6) arranged on the pipe piece (5), and is located in a chamber (8) bounded by the union nut (4), threaded-connection body (3) and pipe piece (5), wherein a floor surface (9) of the chamber (8) allocated to the securing ring (7) incorporates a stepped recess (10) for holding the securing ring (7), comprised of a first step (11) situated adjacent to the chamber (8) and set up to accommodate the securing ring (7) during insertion of the pipe piece (5), and a second step (12) adjoining the latter that secures the securing ring (7) so that it abuts against the retaining surface (6) of the inserted pipe piece (5), wherein the chamber (8) further incorporates a gasket (13) that seals the inserted pipe piece (5) against the threaded-connection body (3), and the pipe piece (5), by pressurizing the medium from its inserted position against the insertion direction (14) relative to the threaded-connection body (3), can be transferred into its locked position, in which the securing ring (7) lies in the second step (12) of the recess (10), **characterized in that** a fixing ring (15) is situated in the chamber (8) between the securing ring (7) and gasket (13), and is supported between the inserted pipe piece (5) and a contact surface (16) formed on the threaded-connection body (3) and/or union nut (4) and inclined with an axial progression in the direction of the securing ring (7) relative to the longitudinal axis (17) of the pipe piece (5), wherein the contact surface (16) is given an inclination in which the fixing ring (15) displaced into its fixed position by the pressurized gasket (13) with the pipe piece (5) in a locked position is clamped in a self-locking manner in the chamber (8), so that the pipe piece (5) is fixed in place backlash-free.

2. The plug-in connection (1) according to claim 1, wherein the contact surface (16) is inclined by an angle (18) of less than 10° relative to a longitudinal axis (17) of the pipe piece (5).

3. The plug-in connection (1) according to claim 1 or 2, wherein the contact surface (16) is formed in the union nut (4).

4. The plug-in connection (1) according to claim 3, wherein the axial boundary surface of the first step (11) of the recess (10) is inclined against the insertion direction (14), and forms the contact surface (16).

5. The plug-in connection (1) according to one of the preceding claims, wherein the contact surface (16) is formed on an intermediate ring (19) that is situated in the chamber (8) and supported between the threaded-connection body (3) and union nut (4), or on a connection piece (20) formed on the threaded-connection body (3).

6. The plug-in connection (1) according to one of the preceding claims, wherein the fixing ring (15) is Z-shaped in its axial cross section, so that it abuts in an axial direction against an intermediate ring (19) situated in the chamber (8) or against a connection piece (20) formed on the threaded-connection body (3) on the one hand, and abuts in an axial direction against a bead (21) on the pipe piece (5) on the other.

7. The plug-in connection (1) according to one of the preceding claims, wherein the fixing ring (15) abuts against a bead (21) of the pipe piece (5) in the inserted position (14) and locked position.

8. The plug-in connection (1) according to one of the preceding claims, wherein the fixing ring (15) exhibits at least one slit (22) aligned parallel to the longitudinal axis (17).

## Revendications

1. Raccord enfichable (1) pour des conduits tubulaires ou flexibles, doté d'un corps à visser (3) comportant un perçage (2) destiné à faire passer un milieu circulant à travers le conduit tubulaire ou flexible et d'un écrou-raccord (4) vissé sur le corps à visser (3), pour le logement verrouillé d'un élément tubulaire (5) enfiché dans le corps à visser (3) au moyen d'une bague de blocage (7) s'appuyant sur une surface de retenue (6) placée sur l'élément tubulaire (5) qui est placée dans une chambre (8) délimitée par l'écrou-raccord (4), le corps à visser (3) et l'élément tubulaire (5), sur une surface de fond inférieur (9) de la chambre (8) associée à la bague de blocage (7) étant conçu un évidement (10) échelonné destiné à recevoir la bague de blocage (7), constitué d'un premier échelon (11) voisin de la chambre (8) et aménagé pour loger la bague de blocage (7) lors de l'enfichage de l'élément tubulaire (5) et d'un deuxième échelon (12) s'y raccordant et immobilisant la bague de blocage (7) dans un appui sur la surface de retenue (6) de l'élément tubulaire (5) enfiché, sachant que par ailleurs dans la chambre (8) est placé un joint (13) assurant l'étanchéité de l'élément tubulaire (5) enfiché par rapport au corps à visser (3) et que par l'exercice d'une pression par le milieu, l'élément tubulaire (5) peut être transféré de sa position d'enfichage à l'encontre de la direction d'enfichage (14) par rapport au corps à visser (3) dans sa position de verrouillage dans laquelle la bague de blocage (7) se situe dans le premier échelon (12) de l'évidement (10), **caractérisé en ce que** dans la chambre (8), entre la bague de blocage (7) et le joint (13) est placée une bague de fixation (15) qui s'appuie entre l'élément tubulaire (5) enfiché et une surface d'appui (16) conçue sur le corps à visser (3) et/ou sur l'écrou-raccord (4) et inclinée par un trajet axial dans la direction de la bague de blocage (7) vers l'axe longitudinal (17) de l'élément tubulaire (5), la surface d'appui (16) étant conçue avec une inclinaison telle que la bague de fixation (15) qui lorsque l'élément tubulaire (5) se trouve dans sa position de verrouillage est déplacée dans sa position de fixation par le joint (13) soumis à une pression soit serrée par autoblocage dans la chambre (8) et de ce fait, immobilise l'élément tubulaire (5) sans jeu.

2. Raccord enfichable (1) selon la revendication 1, la surface d'appui (16) étant inclinée de la valeur d'un angle (18) inférieur à 10° vers un axe longitudinal (17) de l'élément tubulaire (5).

3. Raccord enfichable (1) selon la revendication 1 ou 2, la surface d'appui (16) étant conçue dans l'écrou-raccord (4).

4. Raccord enfichable (1) selon la revendication 3, la surface de délimitation axiale du premier échelon (11) de l'évidement (10) étant inclinée à l'encontre de la direction d'enfichage (14) et formant la surface d'appui (16).

5. Raccord enfichable (1) selon l'une quelconque des revendications précédentes, la surface d'appui (16) étant conçue sur une bague intermédiaire (19) placée dans la chambre (8), s'appuyant entre le corps à visser (3) et l'écrou-raccord (4) ou sur une tubulure (20) conçue sur le corps à visser (3).

6. Raccord enfichable (1) selon l'une quelconque des revendications précédentes, dans sa section transversale axiale, la bague de fixation (15) étant conçue en forme de Z, de sorte que d'une part elle soit adjacente dans la direction axiale à une bague intermédiaire (19) placée dans la chambre (8) ou à une tubulure (20) conçue sur le corps à visser (3) et que d'autre part, elle soit adjacente dans la direction axiale à un bourrelet (21) sur l'élément tubulaire (5).

7. Raccord enfichable (1) selon l'une quelconque des revendications précédentes, dans la position d'enfichage (14) et dans la position de verrouillage, la bague de fixation (15) étant adjacente à un bourrelet (21) de l'élément tubulaire (5).

8. Raccord enfichable (1) selon l'une quelconque des revendications précédentes, la bague de fixation (15) comportant au moins une fente (22) orientée à la parallèle de l'axe longitudinal (17).
